# DEMANDE DE BREVET EUROPEEN

(11) **EP 0 588 205 A1**
(43) Date de publication de la demande: **23.03.1994**
(21) Numéro de dépôt: 93114303.6
(22) Date de dépôt: 07.09.1993
(51) Int. Cl.: H04N 1/00

(54) **Télécopieur muni d'un dispositif facilitant la recharge du papier**

(30) Priorité: 15.09.1992 FR 9211074
(71) Demandeur: SWATCH AG, CH-2500 Biel (CH)
(72) Inventeur: Junod, Blaise-Alain, CH-2067 Chaumont (CH)
(74) Mandataire: Caron, Gérard

(57) **Abrégé**

L'invention concerne un télécopieur comprenant un boîtier (2) composé d'une première partie (6a) et d'une deuxième partie (6b) articulées l'une à l'autre, et des moyens de support (17) situés dans le boîtier (2) pour recevoir un rouleau de papier (15).

Les première et deuxième parties (6a, 6b) du télécopieur sont agencées pour pouvoir pivoter dans un premier sens pour fermer le boîtier (2) ce qui rend impossible l'introduction du support d'enregistrement (15) dans les moyens de support (17). Ces parties du boîtier peuvent également pivoter dans l'autre sens pour ouvrir le boîtier (2) ce qui permet d'y introduire un rouleau (15). Le télécopieur comprend en outre des moyens de verrouillage (23) permettant de verrouiller la première partie (6a) par rapport à la deuxième partie (6b) et des moyens de rappel (18) pour les amener dans une position permettant l'introduction du rouleau (15).

## Description

La présente invention concerne des télécopieurs comprenant un boîtier dans lequel il est possible de stocker un rouleau de papier ou d'autres supports d'enregistrement de données graphiques convenables. Des données graphiques comme des télécopies sont reçues par le télécopieur par l'intermédiaire d'une ligne téléphonique et sont imprimées sur le papier contenus dans le boîtier de façon à permettre de les lire. Bien qu'afin de faciliter la compréhension, l'invention sera décrite plus loin en se référant à un télécopieur qui imprime des données graphiques sur des rouleaux de papier, l'invention ne se limite pas à cette application, et peut être utilisée avec d'autres appareils qui comportent une réserve interne d'un support d'enregistrement de données graphiques. Ces appareils sont par exemple des imprimantes, des machines de traitement et de développement de films, etc.

Les télécopieurs recevant et transmettant des données graphiques par l'intermédiaire de lignes téléphoniques, sont très répandus de nos jours aussi bien dans les bureaux que chez les particuliers. Ces appareils comprennent un lecteur pour lire des données graphiques comme des textes imprimés sur des feuilles de papier et pour transformer ces textes en signaux électriques pour permettre leur transmission. Ces appareils comprennent également une unité d'impression pour imprimer les télécopies reçues. Le rouleau de papier est stocké dans le télécopieur pour fournir un support d'enregistrement sur lequel les données graphiques reçues peuvent être imprimées. De plus, un dispositif de transport du papier est nécessaire pour amener celui-ci du rouleau jusqu'à l'unité d'impression. Le lecteur, l'unité d'impression, le dispositif de transport du papier et le rouleau de papier sont situés à l'intérieur d'un boîtier de protection.

Ces appareils sont munis d'un couvercle détachable pour permettre d'accéder à l'intérieur du boîtier. Le couvercle est verrouillé sur le boîtier et un bouton poussoir est prévu pour commander le dispositif de verrouillage et pour libérer le couvercle. Lorsque le rouleau de papier du télécopieur doit être remplacé, le bouton poussoir est d'abord enfoncé puis le couvercle est dégagé manuellement pour permettre d'accéder par une ouverture à un support prévu pour recevoir un nouveau rouleau de papier. Le nouveau rouleau est alors introduit dans le boîtier à travers l'ouverture, et placé sur le support. L'extrémité de la bande de papier doit ensuite être introduite entre des plaques de guidage de façon à l'aligner par rapport à l'unité d'impression. Le couvercle est ensuite remis en place sur le boîtier et verrouillé. Le télécopieur est ensuite mis sous tension pour permettre son fonctionnement.

Pour remplacer le rouleau de papier du télécopieur il est donc nécessaire de connaître au moins la succession de ces étapes. Dans ce genre d'appareils, seul un minimum d'informations visuelles est fourni quant à, d'une part, la marche à suivre pour remplacer un rouleau de papier et, d'autre part, le mode dans lequel se trouve l'appareil. Les consommateurs d'aujourd'hui donnent leur préférence à des produits dont le mode de fonctionnement est le plus automatique et le plus simple possible. Dans ce contexte il apparaît que la marche à suivre décrite ci-dessus pour remplacer le rouleau de papier, est inutilement compliquée et pas aussi intuitivement évidente qu'elle pourrait l'être.

Une demande pendante de brevet français No 92/09984 du 11 août 1992 décrit un télécopieur comportant un boîtier en deux parties séparables. L'une de ces parties comporte un galet sur lequel on peut placer l'amorce d'un rouleau de papier, lui-même contenu dans cette partie. L'autre partie contient l'unité d'impression, celle-ci étant disposée de manière que lorsque les deux parties sont assemblées, le papier est maintenu par le galet contre l'unité d'impression. Cette disposition présente l'avantage de supprimer l'opération d'insertion de l'extrémité du papier entre les plaques de guidage. Une des parties est équipée de deux barres prévues pour coopérer avec deux ouvertures situées dans l'autre partie, pour permettre l'assemblage des deux parties. Cette disposition présente l'inconvénient de manquer de stabilité et de plus elle exige de l'utilisateur qu'il comprenne le mode d'assemblage des parties, alors que très peu d'indications visuelles sont prévues pour aider l'utilisateur dans l'opération de remplacement du rouleau de papier.

Le but de la présente invention est de fournir un télécopieur qui remédie aux inconvénients de l'art antérieur et/ou qui fournit tout au moins un choix au consommateur.

L'invention atteint ce but en fournissant un télécopieur comprenant un boîtier portant une première et une deuxième partie jointes par une articulation, un support situé dans ledit boîtier pour recevoir un support d'enregistrement sur lequel ledit télécopieur imprime des données graphiques, caractérisé en ce que lesdites première et deuxième parties comportent chacune une surface de support située sur un des côtés dudit boîtier et sur laquelle ledit boîtier repose lorsqu'il se trouve dans une position de fonctionnement, et en ce que lesdites première et deuxième parties peuvent pivoter entre ladite position de fonctionnement dans laquelle lesdites première et deuxième parties coopèrent pour fermer le boîtier et pour empêcher la mise en place dudit rouleau sur ledit support de rouleau, et une position de chargement dans laquelle lesdites surfaces de support sont amenées l'une vers l'autre de façon à créer une ouverture dans le boîtier entre lesdites première et deuxième parties pour permettre la mise en place dudit rouleau dans ledit boîtier, ledit télécopieur comprenant de plus des moyens de verrouillage désengageables pour maintenir ladite première partie solidaire de ladite deuxième partie dans ladite position de fonctionnement, et des moyens de rappel pour amener lesdites première et deuxième parties dans ladite position de chargement lorsque lesdits moyens de verrouillage sont désengagés.

Ainsi, le boîtier du télécopieur peut prendre l'une ou l'autre des deux positions possibles, à savoir une position de chargement du papier et une position de fonctionnement. De plus, le mouvement de pivotement de la première partie relativement à la deuxième partie donne au boîtier une configuration de "V" inversé lorsque l'appareil est dans la position normale de chargement et qu'il est par exemple posé sur un bureau ou une table. L'ouverture ainsi créée entre la première et la deuxième partie fait apparaître nettement et d'une manière qui a un impact visuel, le support du rouleau de papier, invitant par là l'utilisateur à introduire un rouleau de papier dans le boîtier. Cette disposition simple et claire rend l'opération de chargement d'un rouleau de papier évidente pour l'utilisateur.

La description qui va suivre se réfère de manière plus détaillée aux diverses caractéristiques du télécopieur conforme à la présente invention.

Pour faciliter la compréhension de l'invention, on se référera aux dessins annexés dans lesquels un mode de réalisation préféré de l'invention est illustré. L'invention ne se limite toutefois pas au mode de réalisation préféré représenté sur les dessins.
- la figure 1 est une vue de côté d'un mode de réalisation du télécopieur selon l'invention en position de fonctionnement;
- la figure 2 est une vue de côté du télécopieur de la figure 1 en position de chargement;
- la figure 3a est une vue agrandie montrant l'articulation qui relie les deux parties du boîtier du télécopieur dans la position représentée à la figure 1;
- la figure 3b est une vue agrandie de l'articulation qui relie les deux parties du boîtier du télécopieur, représenté en position de chargement; et
- la figure 4 est une vue en plan agrandie des moyens de verrouillage de l'appareil à facsimile de la figure 1.

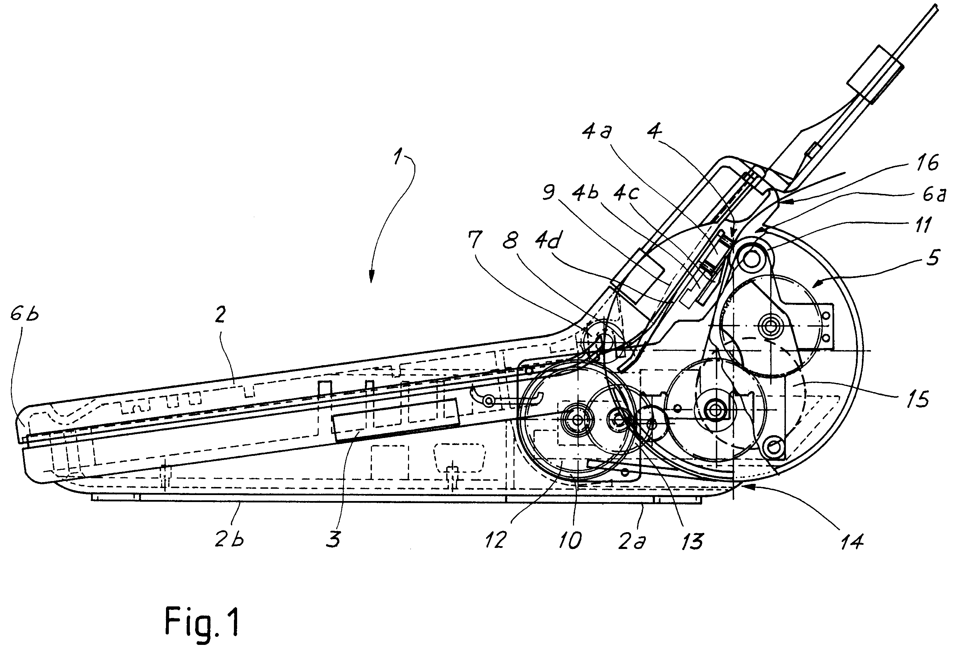

On voit sur la figure 1 un télécopieur 1 comprenant un boîtier principal 2 qui contient un lecteur 3, une unité d'impression 4, et un dispositif de transport du papier 5. Le boîtier 2 comprend une première partie 6a qui loge le système de transport du papier 5, et une deuxième partie 6b qui loge le lecteur 3 et l'unité d'impression 4. Lorsque le télécopieur 1 est dans sa position de fonctionnement conformément à ce qui est représenté à la figure 1, la première partie 6a et la deuxième partie 6b coopèrent pour former un boîtier qui protège et qui cache le lecteur 3 l'unité d'impression 4 et le dispositif de transport du papier 5. Les parties 6a et 6b comportent des surfaces de support 2a et 2b respectivement sur lesquelles le boîtier 2 est posé lorsque le télécopieur est dans sa position de fonctionnement.

Le télécopieur 1 peut comprendre un combiné de téléphone standard, comprenant un dispositif émetteur/récepteur de signaux vocaux et un circuit de traitement des signaux vocaux. Le boîtier 2 du télécopieur 1 peut comprendre un clavier pour permettre de composer les numéros de téléphone, un support pour le combiné, et d'autres équipements associés au fonctionnement d'un téléphone standard.

Le lecteur 3 est disposé à l'intérieur du boîtier 2 du télécopieur 1, de façon à ce qu'il puisse lire des données graphiques, des caractères dactylographiés, des caractères manuscrits ou toutes autres inscriptions portées sur des feuilles de papier, que le dispositif de transport 5 fait passer devant le lecteur 3. Le lecteur 3 transforme les données graphiques lues en signaux électriques. Le télécopieur 1 est conçu pour ensuite envoyer ces signaux électriques par l'intermédiaire d'une ligne téléphonique, à un autre télécopieur, pour que celui-ci puisse reproduire ces données graphiques.

L'unité d'impression 4 comprend une tête d'impression 4a, un circuit de commande de l'impression 4b, un couvercle de protection 4c et une monture de fixation 4d. Le système de transport du papier 5 fait défiler du papier devant l'unité d'impression 4, et la tête d'impression 4a imprime des caractères ou d'autres données graphiques sur ce papier. Le fonctionnement de la tête d'impression 4a est commandé par le circuit de commande de l'impression 4b en réponse à la réception par le télécopieur, de signaux électriques. Le couvercle 4c protège le circuit de commande de l'impression 4b contre d'éventuels dommages qui pourraient être provoqués par exemple par une collision avec le système de transport de papier 5. La monture de fixation 4d de son côté maintient l'unité d'impression 4 en position dans la deuxième partie 6a du boîtier 2 de le télécopieur 1. La monture de fixation 4d peut être élastique, de façon à ce que lors de son fonctionnement, la tête d'impression 4a soit rappelée en direction du dispositif de transport du papier 5.

Le télécopieur 1 comprend de plus un galet d'alimentation en papier 7 et un organe de maintien du papier au support de papier 8. Le galet d'alimentation 7 est monté à rotation par ses deux extrémités dans la deuxième partie 6b du boîtier 2 du télécopieur 1. Le support de papier 8 est disposé de manière à recevoir une ou plusieurs feuilles de papier qui sont introduites dans le télécopieur 1 le long d'une surface de guidage 9 de la deuxième partie 6b du boîtier 2. Le galet d'alimentation 7 et le support de papier 8 sont disposés de manière à constituer un support sur lequel viennent reposer les feuilles de papier introduites le long de la surface de guidage 9.

Quand le galet d'alimentation 7 est entraîné dans un sens qui correspond au sens horaire sur la figure 1, la feuille de papier qui se trouve en contact avec le galet d'alimentation 7 est entraînée par celui-ci pour être introduite dans le dispositif de transport du papier 5. La surface du galet d'alimentation 7 peut être réalisée à partir de silicone ou à partir d'un autre matériau possédant un coefficient de frottement élevé pour renforcer l'action d'entraînement du galet d'alimentation 7. Lorsque plusieurs feuilles de papier reposent entre le galet d'alimentation 7 et le support de papier 8, les feuilles qui ne sont pas directement en contact avec le galet d'alimentation 7 sont retenues par la force de frottement présente soit entre deux feuilles de papier, soit entre une feuille de papier et le support de papier 8. Ainsi seule la feuille de papier qui est en contact avec le galet d'alimentation 7 est introduite dans le dispositif de transport du papier 5.

Le dispositif de transport du papier 5 comprend un de lecture 10 un galet d'impression 11 et un moteur 12 reliés par un train d'engrenages 13 (dont seule une partie est représentée sur la figure 1) qui entraînent le galet de lecture 10 et le galet d'impression 11. Le galet de lecture 10 peut être monté dans la première partie 6a du boîtier 2 pour coopérer avec le galet d'alimentation 7 lorsque le boîtier 2 est dans sa position de fonctionnement (figure 1). Dans cette configuration, le galet d'alimentation 7 sera donc entraîné par le galet de lecture 10. Cet entraînement peut être produit soit par la force de frottement existant entre les deux galets, soit par l'intermédiaire de roues dentées montées sur les galets 7 et 10.

Lorsque le moteur 12 tourne dans un sens, le galet de lecture 10 est entraîné dans le sens anti-horaire (en se référant à la figure 1), et le galet d'alimentation 7 sera par conséquent entraîné dans le sens horaire. Une feuille de papier posée sur la surface de guidage 9 va donc être amenée à passer entre les galets 7 et 10. Le galet de lecture 10 fait ensuite passer la feuille de papier devant le lecteur 3, de manière à ce que les données graphiques se trouvant sur la feuille de papier puissent être lues. La feuille de papier ressort ensuite du boîtier 2 à travers une ouverture 14 dans la partie 6a.

Quand le moteur 12 tourne dans l'autre sens, le galet d'impression est actionné dans le sens horaire. Dans ces conditions, le galet d'impression 11 fait passer du papier venant d'un rouleau de papier 15 logé dans le boîtier 2, devant l'unité d'impression 4 de manière à ce que les données graphiques reçues par le télécopieur 1 puissent être imprimées. Le papier quitte le boîtier à travers une ouverture 16 située entre les parties 6a et 6b.

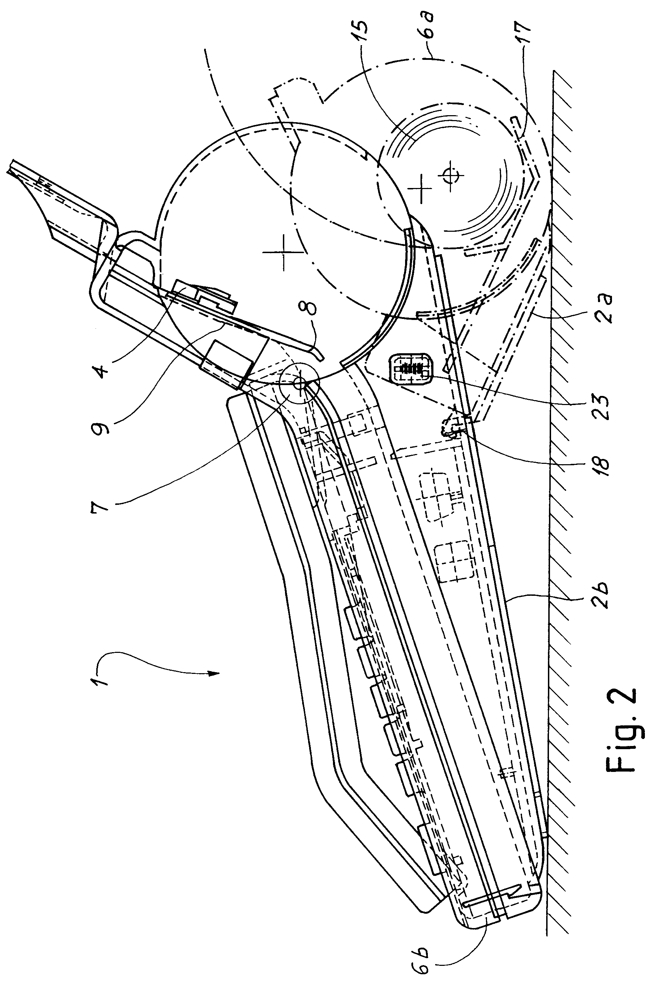

La figure 2 met en évidence les différences qui existent entre les parties 6a et 6b. Dans cette figure le télécopieur 1 est représenté dans sa position de chargement qui permet la mise en place d'un rouleau de papier 15 dans le boîtier 2. Le galet de lecture 10, le galet d'impression 11, le moteur 12 et le train d'engrenages 13, ainsi que l'armature sur laquelle ils sont montés n'ont pas été représentés sur la figure pour des raisons de clarté. On voit sur la figure 2 que la partie 6a du boîtier 2 comprend un support 17 pour le rouleau de papier 15. Le support 17 peut avoir la forme d'un évidement allongé pour recevoir la surface extérieure du rouleau de papier 15, il peut également avoir la forme d'un axe sur lequel le rouleau de papier est monté, ou toute autre forme appropriée pour recevoir un rouleau de papier.

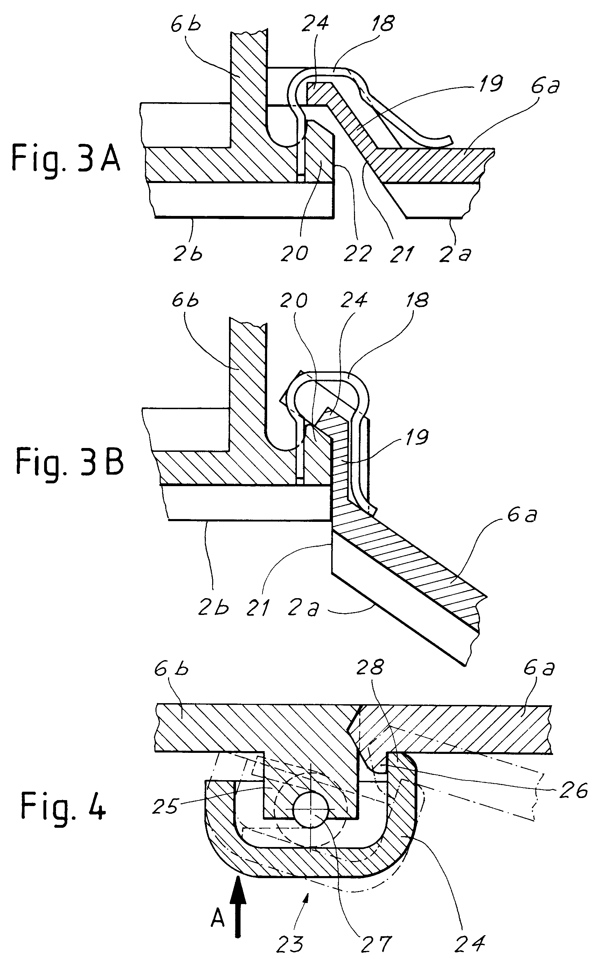

Les deux parties 6a et 6b sont fixées de manière articulée par un élément élastique 18, conformément à ce qui est représenté dans les figures 3a et 3b qui sont deux coupes transversales de la même partie du boîtier 2. Les parties 6a et 6b comportent chacune une partie saillante 19 et 20 respectivement, autour desquelles est disposé un élément élastique 18. Les parties saillantes 19 et 20 ont des faces 21 et 22 respectivement qui sont situées en regard l'une de l'autre. Dans la position de fonctionnement représentée sur la figure 3a, le boîtier 2 repose sur ces deux surfaces de support 2a et 2b et les faces 21 et 22 sont espacées angulairement l'une de l'autre. Dans cette position l'élément élastique 18 exerce une force de rappel qui tend à amener les deux parties 6a et 6b vers la position de chargement représentée sur la figure 3b.

Les parties 6a et 6b peuvent être retenues dans la position de fonctionnement par un mécanisme de verrouillage 23, conformément à ce qui sera expliqué plus loin, mais lorsque le mécanisme de verrouillage 23 est libéré, l'élément élastique 18 fait pivoter les parties 6a et 6b jusqu'à la position de chargement. Lorsque les parties 6a et 6b sont dans la position représentées sur la figure 3b, les faces 21 et 22 viennent s'appuyer l'une contre l'autre, et interdisent donc un mouvement de pivotement au-delà de la position de chargement. La partie saillante 19 comprend de plus un épaulement 24 qui, dans la position de chargement, coopère avec la partie saillante 20 pour empêcher que les parties 6a et 6b puissent se désengager complètement par glissement des faces 21 et 22 l'une sur l'autre. Il est possible de monter soit un seul soit plusieurs de ces éléments élastiques sur la liaison entre les parties 6a et 6b en fonction de l'intensité désirée de la force de rappel, et de la fiabilité de l'articulation. De plus, l'élément élastique 18 peut avoir une forme complètement différente de celle représentée dans la figure 3a et 3b, il peut par exemple être constitué d'un ou plusieurs ressorts à spires. Les parties 6a et 6b peuvent également être joints par une goupille ou un axe autour duquel elles peuvent pivoter.

Comme on le voit sur la figure 2 et plus en détail sur la figure 4, les parties 6a et 6b sont jointes par un mécanisme de verrouillage 23 désengageable, comprenant essentiellement un bouton 24, un monture 25 conformée dans la partie 6a, et un épaulement 26 conformé dans la partie. Le bouton 24 est fixé à la monture 25 de la partie 6b afin de tourner autour d'une goupille 27. Le bouton 24 comporte sur l'un de ses côtés une jupe 28 pour coopérer avec l'épaulement 26 de la partie 6a lorsque les deux parties 6a et 6b sont amenées dans leur position de fonctionnement. Lorsqu'on presse sur la partie A du bouton 23 celui-ci pivote et la jupe 28 se désengage de l'épaulement 26 ce qui libère la partie 6a de la partie 6b. Des moyens élastiques (non représentés) peuvent être prévus pour constituer une force de rappel qui ramène le bouton 24 vers la position représentée en trait plein sur la figure 4, de façon à ce que le mécanisme de verrouillage 23 s'engage automatiquement lorsque les parties 6a et 6b sont amenées dans leur position de fonctionnement. On peut utiliser un ou plusieurs de ces mécanismes de verrouillage 23 pour verrouiller les parties 6a ou 6b. Par exemple, un de ces mécanismes peut être situé de chaque côté du boîtier 2. Le mécanisme de verrouillage 23 n'est décrit qu'à titre d'exemple, et l'homme du métier saura réaliser de nombreux mécanismes équivalents pour verrouiller les parties 6a et 6b.

Lorsque le télécopieur 1 est utilisé de façon normale, les deux parties 6a et 6b sont dans la position de fonctionnement représentée dans la figure 1. Dans cette position, le galet de lecture 10 entraîne le galet d'alimentation en papier 11. Les données graphiques portées par des feuilles de papier posées sur la surface de guidage 9 peuvent ainsi être introduite dans le boîtier 2, lues par le lecteur 3 et les télécopies correspondantes peuvent être envoyés à d'autres télécopieurs situés à distance. De plus, le galet d'impression 11 permet au papier fournit par le rouleau 15 situé à l'intérieur du boîtier 2 d'être amené à l'unité d'impression 4 dans une position qui convient à l'impression. Les télécopies reçues par le télécopieur 1 peuvent être ainsi être lues par l'utilisateur.

Quand on désire introduire ou remplacer le rouleau de papier 15, on presse sur les boutons 24 des deux mécanismes de verrouillage 23 situés de chaque côté du boîtier 2, de façon à ce que les parties 6a et 6b ne soient plus verrouillées. L'élasticité de l'élément 18 provoque le pivotement des parties 6a et 6b et amène donc celles-ci en position de chargement conformément à ce qui est représenté dans la figure 2. Dans cette position, le boîtier 2 présente une ouverture entre les parties 6a et 6b. Le galet de lecture 10, le galet d'impression 11, le moteur 12 et le train d'engrenages 13 sont amenées à s'écarter de l'unité d'impression 4, du galet d'alimentation 7, et des autres éléments compris dans la partie 6b. Ce pivotement donne au boîtier 2 une forme de "V" inversé. Dans cette position l'ouverture dans le boîtier 2 et le support pour le rouleau de papier sont bien en évidence pour l'utilisateur.

Le rouleau de papier 15 peut être introduit à travers l'ouverture dans le boîtier 2 et placé sur le support 17. On fait ensuite passer l'extrémité de la bande de papier sur le galet d'impression 11 de façon à ce que lorsque le boîtier 2 est à nouveau amené dans sa position de fonctionnement, le galet d'impression 11 entraîne le papier vers l'unité d'impression 4.

Pour amener le boîtier dans la position de fonctionnement, on appuie sur le sommet (en se référant aux figures 1 et 2) de façon à vaincre la force de rappel produite par l'élément élastique 18 et à faire pivoter les parties 6a et 6b l'une par rapport à l'autre et à les amener dans la position qui correspond à la figure 3a. Dans cette position, les jupes 28 des mécanismes de verrouillage 23 coopèrent à nouveau avec les épaulements 26 de la partie 6a et maintiennent donc le boîtier 2 dans sa position de fonctionnement.

Nous signalons pour terminer que diverses modifications ou additions peuvent être apportées à l'appareil qui vient d'être décrit sans pour autant que l'on sorte du cadre de l'invention tel qu'il est défini par les revendications annexées.

## Revendications

1. Télécopieur comprenant un boîtier (2) comportant une première (6a) et une deuxième (6b) partie reliées de façon articulée, des moyens de support (17) situés dans ledit boîtier (2) et prévus pour recevoir un support d'enregistrement (15) de données graphiques, caractérisé en ce que lesdites première et deuxième parties (6a, 6b) ont chacune une face de support (2a, 2b) sur lesquelles le boîtier (2) repose lorsqu'il est dans une position de fonctionnement, lesdites première et deuxième parties (6a, 6b) étant prévues pour pivoter entre ladite position de fonctionnement dans laquelle lesdites première et deuxième parties (6a, 6b) coopèrent pour fermer ledit boîtier (2) rendant impossible l'introduction dudit support d'enregistrement (15) dans lesdits moyens de support (17), et une position de chargement dans laquelle lesdites faces de support (2a, 2b) sont amenées l'une vers l'autre afin d'ouvrir ledit boîtier (2) entre lesdites première et deuxième parties (6a, 6b) et à permettre l'introduction dudit support d'enregistrement (15) dans ledit boîtier (2), ledit télécopieur comprenant de plus des moyens de verrouillage désengageables (23) pour verrouiller ladite première partie (6a) à ladite deuxième partie (6b) de façon à maintenir ladite première (6a) et ladite deuxième partie (6b) dans ladite position de fonctionnement, et des moyens de rappel (18) pour amener ladite première (6a) et ladite deuxième partie (6b) dans ladite position de chargement lorsque lesdits moyens de verrouillages (23) sont désengagés.

2. Télécopieur selon la revendication 1, caractérisé en ce que lesdites première et deuxième parties (6a, 6b) sont prévues pour pivoter depuis ladite position de chargement jusqu'à ladite position de fonctionnement lorsqu'on appuie sur une face dudit boîtier (2) qui est opposée à lesdites faces de support (2a, 2b) dudit boîtier alors que ledit boîtier (2) repose sur lesdites faces de support (2a, 2b) dudit boîtier (2).

3. Télécopieur selon l'une quelconque des revendications précédentes, caractérisé en ce que lesdites première et deuxième parties (6a, 6b) dudit boîtier (2) comportent des organes de butées (21, 22) qui coopèrent l'un avec l'autre lorsque lesdites première et deuxième parties (6a, 6b) sont dans ladite position de chargement, pour empêcher lesdites première et deuxième parties (6a, 6b) de pivoter au-delà de ladite position de chargement.

4. Télécopieur selon l'une quelconque des revendications précédentes, caractérisé en ce que lesdits moyens de support (17) sont ménagés à l'intérieur de ladite première (6a) partie dudit boîtier (2).

5. Télécopieur selon l'une quelconque des revendications précédentes, caractérisé en ce qu'il comprend de plus un lecteur (3) pour lire des données graphiques à transmettre à partir d'un second support d'enregistrement, et une unité d'impression (4) pour imprimer des données graphiques reçues sur ledit premier support d'enregistrement (15), ledit lecteur (3) et ladite unité d'impression (4) étant disposés dans ladite deuxième partie (6b) dudit boîtier (2).

6. Télécopieur selon l'une quelconque des revendications précédentes, caractérisé en ce qu'il comprend de plus un dispositif de transport du papier (5) comprenant un galet de lecture (10) pour faire passer ledit deuxième support d'enregistrement (15) devant ledit lecteur (3), un galet d'impression (11) pour faire passer ledit premier support d'enregistrement (15) devant ladite unité d'impression (4) , un moteur (12) comportant un arbre rotatif, et des moyens de transmission (13) de la rotation pour transmettre la rotation dudit arbre audit galet de lecture (10) et audit galet d'impression (11), ledit dispositif de transport du papier (15) étant disposé dans ladite première partie (6a) dudit boîtier (2).

7. Télécopieur selon la revendication 6, caractérisé en ce que lorsque lesdites première et deuxième parties (6a, 6b) pivotent vers leur position de fonctionnement, ledit galet d'impression (11) amène ledit premier support d'enregistrement (15) en contact avec l'unité d'impression (4).
